(19) **Europäisches Patentamt / European Patent Office / Office européen des brevets**

(11) **EP 2 086 761 B1**

(12) **EUROPEAN PATENT SPECIFICATION**

(45) Date of publication and mention
of the grant of the patent:
**05.09.2012 Bulletin 2012/36**

(51) Int Cl.:
**B32B 27/34** *(2006.01)*

(21) Application number: **07856245.1**

(22) Date of filing: **23.11.2007**

(86) International application number:
**PCT/EP2007/010212**

(87) International publication number:
**WO 2008/064838 (05.06.2008 Gazette 2008/23)**

(54) **MULTILAYER THERMOFORMED ARTICLE**

MEHRSCHICHTIGER THERMOGEFORMTER ARTIKEL

ARTICLE THERMOFORMÉ MULTICOUCHES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.11.2006 EP 06024604**

(43) Date of publication of application:
**12.08.2009 Bulletin 2009/33**

(73) Proprietor: **DSM IP Assets B.V.**
**6411 TE Heerlen (NL)**

(72) Inventors:
• **KROON DE, Jan**
  **6093 JH Heythuysen (NL)**

• **BRINK, Ted**
  **6211 XR Maastricht (NL)**
• **GOERTZ, Henricus Johannes Jacobus**
  **6166 HX Geleen (NL)**
• **BRONSAER, Cornelia Emilie Maria**
  **6171 HM Stein (NL)**

(74) Representative: **Verhaegen, Ilse Maria M. et al**
**DSM Intellectual Property**
**P.O. Box 4**
**6100 AA Echt (NL)**

(56) References cited:
**WO-A-03/106171**

**Description**

The present invention relates to a multilayer thermoformed article comprising at least a sealant layer, an adhesive layer and a polyamide layer.

Such multilayer thermoformed articles are known in the art and are for example described in EP-A-800915. Such multilayer thermoformed articles are widely used as packaging material for various kind of food, such as for example bread, fish, cheese and meat. Thermoforming is the process of forming a thermoplastic sheet or film into a three-dimensional shape. This is usually effected by clamping the sheet or film in a frame, heating the sheet or film to render it in a pliable, semi-soft state, and then make the sheet or film conform to the shape of a mold or die positioned below the frame by applying vacuum, pressure and/or direct mechanical force. After a cooling period, the formed part is released. A thermoforming process thus requires a certain temperature for heating the thermoformable sheet or film and requires mostly a certain pressure to make the sheet conform to the shape of the mold. When the material requires assistance to reach the "hard to reach" areas on the mold, a plug assist may be employed. The plug assist ensures proper distribution of material throughout the part.

A disadvantage however is that for obtaining such multilayer thermoformed articles a relatively high temperature and/or pressure may be required.

WO 03/106171 A discloses a multilayer film comprising in the following sequence a layer of polyethylene, an adhesive layer and a branched polyamide layer. There is no indication as to the possible thermoformability of said film.

The invention aims to provide a multilayer thermoformed article that can be obtained at a lower temperature and/or pressure.

This aim is achieved according to the invention by a branched polyamide being used as polyamide.

It has surprisingly been found that using a branched polyamide as polyamide results in that a multilayer thermoformed article of a certain depth can be obtained at a lower temperature and/or pressure or that at a given temperature and/or pressure a multilayer thermoformed article of an increased depth can be obtained. A lower required temperature is advantageous as for example the choice of polymers for the other layers becomes less critical because as a rule the melting point of the polymers must be higher than the temperature of the thermoforming process. A lower required pressure is for example advantageous because multilayer thermoformed articles with an increased thickness can be more easily obtained, for example without the necessity of using plug assists. Another advantage of the use of a branched polyamide as polyamide is that the thermoformed article follows more the contours of the mold, especially in hard to reach areas on the mold such as for example the corners and deliberate irregularities in the mold. Another advantage is that the multilayer thermoformed article according to the invention possesses better uniformity of wall thickness of the article, in particular also in -if any- sharp-edged corners of the article than when non-branched polyamide is used. Thus, the multilayer thermoformed articles according to the invention is distinguished by its improved thermoformed properties, in particular by its improved conversion (such as increased depths, better following the contours of the mold, less shrinkage and/or possibility to thermoform thicker multilayer thermoformable structures) and by the lower required thermoforming temperature and/or pressure.

As branched polymer use may be made of the known branched polymers characterized in that at least 50% of the polymer chains possesses more than one chain branch or in that the polyamide molecule contains at least a starshaped section. Branched polymers are known from for example EP-A-345 648 and WO- 00/35992. It is preferred to use gel-free branched polyamides such as those known from WO-00/35992. These give films of highly uniform appearance without the irregularitiers caused by gels. These may be characterized as intrinsically gel-free, randomly branched polyamides at least composed of units derived from:

1. AB monomers, which are understood to be a monomer possessing both a carboxylic acid group (A) and an amine group (B).
2. at least one compound I, being a carboxylic acid ($A_v$) with functionality $v \geq 2$ or an amine ($B_w$) with functionality $w \geq 2$,
3. at least one compound II, being a carboxylic acid ($A_v$) with functionality $v \geq 3$ or an amine ($B_w$) with functionality $w \geq 3$, with compound II being a carboxylic acid if compound I is an amine is or with compound II being an amine if compound I is a carboxylic acid, characterized in that the amounts of units derived from all carboxylic acids and amines in the polyamide satisfy formula 1

$$P < 1 / [(F_A - 1).(F_B - 1)] \qquad (1)$$

where:

$$P = [\Sigma(n_i.f_i)]_X / [\Sigma(n_i.f_i)]_Y \qquad (2)$$

where $P \leq 1$ and either $X = A$ and $Y = B$, or $X = B$ and $Y = A$ and

$$F = \Sigma \, (n_i.f_i^2) \, / \, \Sigma \, (n_i.f_i) \qquad (3)$$

for, respectively, all carboxylic acids ($F_A$) and amines ($F_B$), wherein $f_i$ is the functionality of a carboxylic acid (v) or amine (w) i, $n_i$ the number of moles of a carboxylic acid or amine and the summation is conducted for all units derived from carboxylic acids and amines in the polyamide. These give films with a highly uniform appearance, without the irregularities caused by gels. Highly suited for application in the processs according to the invention is branched polyamide wherein caprolactam is the predominant monomer unit.

In an even more preferred embodiment of the invention, the branched polyamide is built up at least of units derived from:

1. AB monomers;
2. at least one compound I, this being a dicarboxylic acid ($A_2$);
3. at least one compound II, this being a triamine ($B_3$); and
4. optionally a compound III, this being a monocarboxylic acid ($A_1$),
wherein the polyamide is also built up of units derived from
5. at least one compound IV, this being a diamine ($B_2$); and in that the relative amounts n of the said components satisfy the following relationships:

$$0 \leq \frac{n_{A1}}{n_{B3}} \leq 4$$

$$1 \leq \frac{n_{A2}}{n_{B3}} \leq 4$$

$$200 \leq \frac{n_{AB}}{n_{B3}} \leq 2000$$

$$\frac{2}{5} \leq \frac{n_{B2}}{n_{B3}}$$

$$0.996 \leq \bar{f}_{nA} = \frac{n_{A1} + 2n_{A2} + n_{AB}}{n_{A1} + n_{A2} + n_{B2} + n_{B3} + n_{AB}} \leq 1$$

$$0.98 \leq \bar{f}_{nB} = \frac{2n_{B2} + 3n_{B3} + n_{AB}}{n_{A1} + n_{A2} + n_{B2} + n_{B3} + n_{AB}} \leq 1.004$$

$$2n_{B2} + 3n_{B3} \leq \tfrac{1}{400} n_{AB} + 3n_{A2}$$

The use of the latter branched polyamides results in improved adhesion properties.
In another embodiment of the invention, the branched polyamide is built up at least of units derived from:

1. AB monomers;
2. at least one compound I, this being a dicarboxylic acid ($A_2$);
3. at least one compound II, this being a triamine ($B_3$); and
4. at least one compound III, this being a monocarboxylic acid ($A_1$),

wherein the relative amounts n of the said components satisfy the following relationships:

$$\frac{3n_{B3}}{n_{A1} + 2n_{A2}} = \frac{60}{40} - \frac{40}{60}$$

$$\frac{2n_{A2}}{n_{A1}} = \frac{15}{85} - \frac{60}{40}$$

$$200 \leq \frac{n_{AB}}{n_{B3}} \leq 8000$$

In another embodiment of the invention, the branched polyamide is built up at least of units derived from:

1. AB monomers;
2. at least one compound I, this being a diamine ($B_2$);
3. at least one compound II, this being a tricarboxylic acid ($A_3$); and
4. at least one compound III, this being a monoamine ($B_1$),

wherein the relative amounts n of the said components satisfy the following relationships:

$$\frac{3n_{A3}}{n_{B1} + 2n_{B2}} = \frac{60}{40} - \frac{40}{60}$$

$$\frac{2n_{B2}}{n_{B1}} = \frac{15}{85} - \frac{60}{40}$$

$$200 \leq \frac{n_{AB}}{n_{A3}} \leq 8000$$

In the context of the present application, AB monomer is understood to be a monomer that has both a carboxylic acid group (A) and an amine group (B) and a compound, in particular a lactam, from which, for instance through ring opening, a monomer can be formed that possesses a carboxylic acid group and an amine group.

In the context of the present application, compound I and compound II are also understood to be mixtures of several carboxylic acids having the same functionality or mixtures of several amines having the same functionality.

In the context of the present application, carboxylic acid and amine are understood to be, respectively, a compound which, besides one or more carboxylic acid groups, does not carry any amine groups, and vice versa. It follows that units derived from carboxylic acids or amines in the polymer have a chemical composition that differs from that of the units derived from the AB monomers. In the context of the invention, carboxylic acid group is understood to be a group that can form a covalent bond with an amine group, for instance -COOH, -COHal (Hal=halogen), -CO$_2$R, with R being an alkyl residue with 1 to 20 carbon atoms, and -SO$_2$Hal (Hal =Halogen).

In the context of the present application, functionality is understood to be the number of functional groups in, respectively, the carboxylic acid or the amine, that can form a bond with other carboxylic acids, amines or AB monomers in the randomly branched polyamide. A functional group that cannot form this bond, for instance a sterically hindered amine group or an aromatic amine group, is not counted as a functional group when determining the functionality. Likewise, the functionality is equated to 1 if two functional groups on a compound are both involved in a single bond with a third functional group, for instance two COOH groups that are close together and that form an imide bond with an amine, for instance in the compound orthodicarboxybenzene.

Eligible AB monomers are all AB monomers that can be used for the production of polyamides, in particular $\alpha$, $\omega$-amino acids and/or lactams, for instance caprolactam, laurine lactam and dodecalactam, as well as the corresponding amino acids and aromatic amino acids, for instance p-(aminomethyl)-benzoic acid. Preferably, the lactam is $\varepsilon$-caprolactam.

Eligible carboxylic acids (Av) are preferably difunctional carboxylic acids ($A_2$), for instance adipic acid, dodecane dicarboxylic acid, isophthalic acid and terephthalic acid and trifunctional carboxylic acids ($A_3$), for instance 1,3,5-tris (caproic acid) melamine, 2,4,6-pyridine tricarboxylic acid, trimesic acid and trimeric fatty acids with 50-60 carbon atoms as well as esters and anhydrides of said carboxylic acids. Preferably, the difunctional carboxylic acid is terephthalic acid or adipic acid. More preferably, the difunctional carboxylic acid is adipic acid. Preferably, the trifunctional carboxylic acid is 1,3,5-tris (caproic acid) melamine (TCAM) or trimesic acid.

Eligible amines (Bw) are preferably difunctional amines ($B_2$), for instance diaminobutane, diaminohexane, diaminododecane, cyclic amines, for instance 1,4-diaminocyclohexane, 4,4'-diaminobicyclohexylamine, 1,3- and 1,4-xylylene diamine and trifunctional amines ($B_3$), for instance trisaminononane and bis (hexamethylene triamine). Preferably, the difunctional amine is 1,6-hexamethylene diamine. Preferably, the trifunctional amine is bis (hexamethylene triamine).

Eligible monofunctional carboxylic acids ($A_1$) are for instance benzoic acid, acetic acid and propionic acid.

Eligible monofunctional amines ($B_1$) are for instance cyclohexyl amine, $C_2$-$C_{24}$ alkylamine, such as for example tridecyalamine, and benzylamine.

Preferably, the proportion of monofunctional carboxylic acids ($A_1$) (chain regulators) is greater than 0.

The intrinsically gel-free, randomly branched polyamide preferably to be used in the present invention can be produced using methods known to one skilled in the art, both via a batch process and via a continuous process. According to a first embodiment, all AB monomers, carboxylic acids and amines are polymerized in amounts according to the invention in a reactor at a suitable pressure and temperature. According to a second embodiment, the carboxylic acids and amines are added to a melt of a polyamide built up of units derived from AB monomers.

The polyamide applied in the polyamide layer consists mainly of branched polyamide, which is understood to mean that in addition to the branched polyamide a quantity of non-branched polyamide may also be present. This quantity should be limited in such a way that the beneficial effects of the application of the branched polyamide are not lost to an unacceptable degree. Preferably at least 50% of the polyamide in the polyamide layer is branched polyamide, and more preferably at least 75% and even at least 90%. The beneficial effect of the presence of the branched polyamide is most manifest when all the polyamide in the layer is branched polyamide. Mixtures of different branched polyamides can also be applied as branched polyamide

The polyamide may further contain the usual additives, for example nucleating agents, fillers, lubricants, flame retardants, antistatics, anti-blocking agents, colorants and stabilizers.

In a preferred embodiment of the invention, the multilayer thermoformed article comprises, in the following sequence, a sealant layer, an adhesive layer and a branched polyamide layer, whereby the sealant layer forming the inside of the thermoformed article.

The multilayer thermoformed article according to the invention can advantageously be applied for packaging of food products, whereby the food product(s) is (are) disposed in the multilayer thermoformed article and whereby the multilayer thermoformed article is advantageously closed by sealing the multilayer thermoformed article by a sealing film.

As used herein, the outside is the side of the multilayer thermoformed article that, after having packed a good and after having sealed the sealant layer with a sealing film, will come into contact with the environment; while the inside of the multilayer thermoformed article is the side that will come into contact with the packed good.

In one embodiment of the invention, the multilayer thermoformed article further comprises a polymer layer. Preferably, the polymer layer is a moisture barrier layer and/or the polymer layer provides gloss to the multilayer thermoformed article. In this embodiment, the multilayer thermoformed article preferably further comprises an adhesive layer between the polymer layer and the polyamide layer.

The moisture barrier layer preferably comprises a moisture barrier polymer selected from polyolefin homopolymer, copolymer or blends thereof. More preferably, the moisture barrier polymer comprises polyethylene and even more preferably , the moisture barrier polymer being polyethylene.

The polymer layer that provides gloss to the multilayer thermoformed article preferably comprises polypropylene. More preferably, the multilayer thermoformed article being polypropylene

In another embodiment, the multilayer thermoformed article further comprises a gas barrier layer and preferably further comprises a second polyamide layer. In this embodiment, the multilayer thermoformed article comprises, in the following sequence, a sealant layer, an adhesive layer, a polyamide layer, a gas barrier layer and a polyamide layer whereby at least one of the polyamide layer comprises a branched polyamide and whereby the sealant layer forming the inside of the thermoformed article. Preferably, both polyamide layers comprise branched polyamide. Preferably, a branched polyamide as defined herein above is used.

In still another embodiment, the multilayer thermoformed article comprises, in the following sequence, a sealant layer, an adhesive layer, a polyamide layer, a gas barrier layer, a polyamide layer, an adhesive layer and a polymer layer whereby at least one of the polyamide layer comprises a branched polyamide and whereby the sealant layer forming the inside of the thermoformed article. Preferably, both polyamide layers comprise branched polyamide. Preferably, a branched polyamide as defined herein above is used.

The gas barrier layer is preferably an oxygen barrier layer. The gas barrier layer preferably comprises a gas barrier polymer being ethylene vinyl alcohol copolymer. More preferably, the gas barrier polymer present in the gas barrier layer being ethylene vinyl alcohol copolymer. It has surprisingly been found that the use of a branched polyamide results in that less rupturing of the gas barrier layer occurs when thermoforming the multilayer film. Quite often thermoforming a multilayer film comprising a gas barrier layer induces cracks, discontinuity and/or thinning ("neckdown") in the gas barrier layer. As a result a thermoformed multilayer article comprising a gas barrier layer often exhibits inferior gas barrier properties. This is in particular the case when the gas barrier layer contains a polymer having a "forming temperature", that is the temperature at which it can be deformed, higher than the temperature at which the thermoforming operation is conducted. Examples of such polymers are ethylene vinyl alcohol copolymer (EVOH). It has been found that thermoforming a multilayer structure comprising a gas barrier ethylene vinyl alcohol layer and a branched polyamide layer results in less discontinuities in the barrier layer, and thus in improved barrier properties of the multilayer thermoformed article, compared to when a multilayer film comprising a gas barrier ethylene vinyl alcohol layer and a non-branched polyamide layer is thermoformed.

In a preferred embodiment of the invention, the multilayer thermoformed article comprises, in the following sequence, a sealant layer, an adhesive layer, a polyamide layer, an EVOH layer, a polyamide layer, an adhesive layer and a polymer layer, whereby at least one of the polyamide layer comprises a branched polyamide and whereby the sealant layer forming the inside of the thermoformed article. Preferably, both polyamide layers comprise branched polyamide. Preferably, a branched polyamide as defined herein above is used.

The adhesive layer comprises an adhesive resin. Examples of suitable adhesive resins are thermoplastic polymers having carbonyl groups derived from functional groups of free carboxylic acids, carboxylic acid salts, carboxylic acid esters, carboxylic acid amides, carboxylic anhydrides, carbonic acid esters, urethanes, ureas, epoxies and the like. Suitable adhesive resins include polyolefins modified with at least one ethylenically unsaturated monomer selected from unsaturated carboxylic acids and anhydrides, esters and amides thereof, especially polypropylene, high density polyethylene and low density polyethylene modified with at least one member selected from acrylic acid, methacrylic acid, crotonic acid, fumaric acid, itaconic acid, maleic anhydride, itaconic anhydride, ethyl acrylate and methyl methacrylate. Preferably, the tie layer comprises a maleic anhydride modified polyolefin. More preferably, the tie layer comprises a maleic anhydride modified polyethylene or polypropylene. Suitable adhesive resins also include urethane-based adhesives and epoxy-based adhesives.

The sealant layer comprises a sealant polymer that is capable of being sealed by a sealing or lidding film. The nost important feature of the sealant layer is its ability to melt at considerably lower temperatures than the melting point of strength imparting layers of the multilayer thermofromable structure, i.e. what are usually the polyamide-containing layers.. Examples of sealant polymers are linear low density polyethylene, a metallocene catalysed polyethylene, ethylene vinyl acetate and ionomers. Preferably, the sealing film is an oxygen scavenging multilayer film.

The multilayer thermoformed article according to the invention preferably has a wall thickness of from 20 to 1000 micrometers, preferably from 50 to 1000 micrometers and more preferably from 150 to 350 micrometers. Typical multilayer thermoformed articles include thermoformed trays.

The invention further relates to the use of the multilayer thermoformed article as defined hereinabove for packaging in particular food products, such as for example cheese, fish, meat and bread.

The invention further relates to a process for the preparation of a multilayer thermoformed article as defined hereinabove by thermoforming a multilayer structure comprising at least a sealant layer, an adhesive layer and a branched polyamide layer. The thermoforming process usually comprises (1) preheating the multilayer structure at an appropriate temperature, (2) applying vacuum, pressure and/or mechanical means to conform the heated structure to a mold, (3) cooling the article, usually by the mold surface, (4) removing the thermoformed article from the mold. Producing a multilayer thermoformed article is a technology known per se. The thermoforming temperature, pressure and dwell time depend on the polymers being used. One skilled in the art can select an appropriate temperature, pressure and dwell time for obtaining the multilayer thermoformed article according to the invention. A suitable forming temperature for obtaining the multilayer thermoformed article according to the invention is a temperature higher than 50 ºC, preferably higher than 55 ºC. The temperature is usually lower than 120 ºC, preferably lower than 110 ºC. A suitable forming pressure is, for example, from 20 to 200 kPa. A suitable forming vacuum is, for example, between 0 and 4 kPa, especially between 0 and 2 kPa. It has surprisingly been found that using branched polyamide as polyamide results in that multilayer thermoformed articles of increased depths can be obtained without having to increase the temperature and/or pressure, or the temperature and/or pressure can be lowered for obtaining a multilayer thermoformed article of a certain depth.

There are several types of thermoforming, including vacuum forming, pressure forming, twin-sheet forming, drape forming, vacuum snapback and inline thermoforming. The two most important types of thermoforming are vacuum forming and pressure forming, that are technologies known per se. Vacuum forming and pressure forming both evacuate the sealed air space between the heated plastic and mold. In the vacuum forming process, thermoplastic sheet or film is heated to a forming temperature, then stretched onto a mold, and held against the mold by applying vacuum between the mold surface and the sheet. Pressure forming is a type of vacuum forming where both vacuum and compressed air are used to force the thermoplastic sheet or film against the mold; vacuum is applied to the mold below the plastic sheet and air pressure is simultaneously forced on top of the sheet. Air pressure is used as a forming aid to increase the detail on the mold side. After the platens are closed, the vacuum pulls on one side of the sheet and compressed air pushes on the other.

The thermoformable multilayer structure may be prepared by any method well known in the art of making multilayer structures, for example coextrusion, extrusion coating or lamination. The thermoformable multilayer structure may be a sheet or a film. The thermoformable multilayer structure may have any thickness. For food applications usually a thermoformable multilayer film is used having a thickness of from 20 to 250 micrometers.

The invention will be elucidated with reference to the following examples and comparative experiments.

Experimental set-up and preparation of the multilayer films

For the determination of the thermoforming properties, 5-layer films were prepared using a Collin cast film line. The extrusion line was equipped with 3 extruders to produce symmetrical films with the structure A-B-C-B-A.

For the outer layers (A) a blend of 70 % LDPE and 30 % LLDPE was used, Sabic® LDPE 2402TC32 and Sabic® LLDPE 6318BE, respectively; both are products of Sabic.

As tie resin (B-layers), Yparex® 9403, produced by DSM, was used.

The middle (C) layer consists of linear PA6, Akulon® F132-E1 or branched PA6, Akulon® XP32-E1. Both are produced by DSM.

The layer thickness of the film structure PE/tie/PA6/tie/PE was 50/10/60/10/50 $\mu$m.

Immediately after production, the films have been stored under dry conditions until they were used for the thermoforming experiments.

The processing conditions were as follows:

A. PE extruder: 30 mm diameter, 25D length. Barrel temperature: 170 - 200 - 230 - 230 °C;
B. Tie resin extruder 25 mm diameter, 25 D length. Barrel temperature: 170 - 200 - 230 - 230 °C;
C. PA6 extruder 30 mm diameter, 30D length. Barrel temperature: 240 - 275 - 270 - 270 - 270 °C;

Feed block and die temperature 260 °C; die width 300 mm, die gap 0.4 mm; chill roll temperature 20 °C; line speed: 4.5 m/min.

Examples I-V and comparative experiments A-E

A circular mold having a diameter of 45 mm and free thermoform depth was used. The film samples were preheated between 2 metal plates of which the temperature is controlled. The heating time between the plates amounted to 10 seconds. The temperature was varied between 60 and 95 °C (see Table I). After the preheating, the film sample was moved to the thermoforming station in 4½ seconds.

Cups were thermoformed using air pressure. The depth of the cup was measured by means of a laser beam.

It has surprisingly been found that the multilayer films with Akulon® XP32-E1 as polyamide layer could be thermoformed at a lower pressure compared to multilayer films with Akulon® F132-E1 as polyamide layer.

In Table I, the required pressure is shown at different temperature to realize a cup depth of 25 mm.

Table I. Required pressure to realize a thermoform depth of 25 mm

| temperature [°C] of the multilayer film | pressure [bar] | |
|---|---|---|
| | XP32-E1 (ex. I-V) | F132-E1 (comp. ex. A-E) |
| 60 | 0.74 | 1.32 |
| 70 | 1.08 | 1.23 |

(continued)

| temperature [°C] of the multilayer film | pressure [bar] | |
| --- | --- | --- |
| | XP32-E1 (ex. I-V) | F132-E1 (comp. ex. A-E) |
| 80 | 1.03 | 1.13 |
| 90 | 0.98 | 0.98 |
| 95 | 0.88 | 0.98 |

Example VI and comparative experiment F-G

Using the same equipment, the temperature was measured to realize a cup with a depth of 37 mm using a pressure of 1 bar.

For Akulon® F132-E1 a temperature of 95 °C is required whereas for Akulon® XP32-E1 a temperature of only 65 °C is required.

Of Akulon® F132-E1 a cup with a depth of only 10 mm can be thermoformed at a temperature of 65 °C.

**Claims**

1.   Multilayer thermoformed article comprising at least a sealant layer, an adhesive layer and a polyamide layer, **characterized in that** a branched polyamide is used as polyamide.

2.   Multilayer thermoformed article according to claim 1, **characterized in that** the branched polyamide is an intrinsically gel-free, randomly branched polyamide.

3.   Multilayer thermoformed article according to claim 1 or 2, **characterized in that** the branched polyamide is at least composed of units derived from:

   a. AB monomers, which are understood to be a monomer possessing both a carboxylic acid group (A) and an amine group (B),
   b. at least one compound I, being a carboxylic acid ($A_v$) with functionality $v \geq 2$ or an amine ($B_w$) with functionality $w \geq 2$,
   c. at least one compound II, being a carboxylic acid ($A_v$) with functionality $v \geq 3$ or an amine ($B_w$) with functionality $w \geq 3$, with compound II being a carboxylic acid if compound I is an amine is or with compound II being an amine if compound I is a carboxylic acid, wherein the amounts of units derived from all carboxylic acids and amines in the polyamide satisfy formula 1

$$P < 1 / [(F_A - 1).(F_B - 1)] \qquad (1)$$

where:

$$P = [\Sigma(n_i.f_i)]_X / [\Sigma(n_i.f_i)]_Y \qquad (2)$$

where $P \leq 1$ and either $X = A$ and $Y = B$ or $X = B$ and $Y = A$ and

$$F = \Sigma (n_i.f_i^2) / \Sigma (n_i.f_i) \qquad (3)$$

for, respectively, all carboxylic acids ($F_A$) and amines ($F_B$), wherein $f_i$ is the functionality of a carboxylic acid ($v_i$) or amine ($w_i$), $n_i$ is the number of moles of a carboxylic acid or amine and the summation is conducted for all units derived from carboxylic acids and amines in the polyamide.

4.   Multilayer thermoformed article according to anyone of claims 1-3, **characterized in that** the branched polyamide is built up at least of units derived from:

1. AB monomers;
2. at least one compound I, this being a dicarboxylic acid ($A_2$);
3. at least one compound II, this being a triamine ($B_3$); and
4. optionally a compound III, this being a monocarboxylic acid ($A_1$), **characterized in that** the polyamide is also built up of units derived from
5. at least one compound IV, this being a diamine ($B_2$); and **in that** the relative amounts n of the said components satisfy the following relationships:

$$0 \leq \frac{n_{A1}}{n_{B3}} \leq 4$$

$$1 \leq \frac{n_{A2}}{n_{B3}} \leq 4$$

$$200 \leq \frac{n_{AB}}{n_{B3}} \leq 2000$$

$$\frac{2}{5} \leq \frac{n_{B2}}{n_{B3}}$$

$$0.996 \leq \bar{f}_{nA} = \frac{n_{A1} + 2n_{A2} + n_{AB}}{n_{A1} + n_{A2} + n_{B2} + n_{B3} + n_{AB}} \leq 1$$

$$0.98 \leq \bar{f}_{nB} = \frac{2n_{B2} + 3n_{B3} + n_{AB}}{n_{A1} + n_{A2} + n_{B2} + n_{B3} + n_{AB}} \leq 1.004$$

$$2n_{B2} + 3n_{B3} \leq \frac{1}{400} n_{AB} + 3n_{A2}$$

**5.** Multilayer thermoformed article according to claim 4, **characterized in that** the dicarboxylic acid ($A_2$) is adipic acid.

**6.** Multilayer thermoformed article according to claim 4 or 5, **characterized in that** the triamine ($B_3$) is bis(hexamethylene triamine).

**7.** Multilayer thermoformed article according to any one of claim 4-6, **characterized in that** the diamine is 1,6-hexamethylene diamine.

**8.** Multilayer thermoformed article according to anyone of claims 1-3, **characterized in that** the branched polyamide is built up at least of units derived from:

1. AB monomers;
2. at least one compound I, this being a dicarboxylic acid ($A_2$);
3. at least one compound II, this being a triamine ($B_3$); and
4. at least one compound III, this being a monocarboxylic acid ($A_1$), **characterized in that** the relative amounts n of the said components satisfy the following relationships:

$$\frac{3n_{B3}}{n_{A1} + 2n_{A2}} = \frac{60}{40} - \frac{40}{60}$$

$$\frac{2n_{A2}}{n_{A1}} = \frac{15}{85} - \frac{60}{40}$$

$$200 \le \frac{n_{AB}}{n_{B3}} \le 8000$$

9. Multilayer thermoformed article according to anyone of claims 1-3, **characterized in that** the branched polyamide is built up at least of units derived from:

   1. AB monomers;
   2. at least one compound I, this being a diamine ($B_2$);
   3. at least one compound II, this being a tricarboxylic acid ($A_3$); and
   4. at least one compound III, this being a monoamine ($B_1$), **characterized in that** the relative amounts n of the said components satisfy the following relationships:

$$\frac{3n_{A3}}{n_{B1} + 2n_{B2}} = \frac{60}{40} - \frac{40}{60}$$

$$\frac{2n_{B2}}{n_{B1}} = \frac{15}{85} - \frac{60}{40}$$

$$200 \le \frac{n_{AB}}{n_{A3}} \le 8000$$

10. Multilayer thermoformed article according to any one of claims 1-9, **characterized in that** the multilayer thermoformed article comprises, in the following sequence, a sealant layer, an adhesive layer and a branched polyamide layer, whereby the sealant layer forming the inside of the thermoformed article.

11. Multilayer thermoformed article according to anyone of claims 1-10, **characterized in that** the multilayer thermoformed article further comprises a polymer layer.

12. Multilayer thermoformed article according to claim 11, **characterized in that** the multilayer thermoformed article further comprises an adhesive layer between the polymer layer and the polyamide layer.

13. Multilayer thermoformed article according to anyone of claims 1-12, **characterized in that** the multilayer thermoformed article further comprises a gas barrier layer.

14. Multilayer thermoformed article according to claim 13, **characterized in that** the gas barrier layer comprises ethylene vinyl alcohol copolymer.

15. Use of a multilayer thermoformed article according to any one of claims 1-14 for packaging a food product.

16. Process for preparing a multilayer thermoformed article according to anyone of claims 1-15 by thermoforming a multilayer structure comprising at least a sealant layer, an adhesive layer and a polyamide layer, **characterized in that** a branched polyamide is used as polyamide.

17. Process according to claim 16, **characterized in that** the branched polyamide is the branched polyamide as defined in any one of claims 2-9.

**Patentansprüche**

1. Mehrschichtiger thermogeformter Artikel mit mindestens einer Versiegelungsmittelschicht, einer Klebstoffschicht und einer Polyamidschicht, **dadurch gekennzeichnet, dass** als Polyamid ein verzweigtes Polyamid verwendet wird.

2. Mehrschichtiger thermogeformter Artikel nach Anspruch 1, **dadurch gekennzeichnet, dass** es sich bei dem verzweigten Polyamid um ein intrinsisch gelfreies, statistisch verzweigtes Polyamid handelt.

3. Mehrschichtiger thermogeformter Artikel nach Anspruch 1 oder 2, **dadurch gekennzeichnet, dass** das verzweigte Polyamid mindestens aus Einheiten aufgebaut ist, welche abgeleitet sind von:

   a. AB-Monomeren, unter denen Monomere, die sowohl eine Carbonsäuregruppe (A) als auch eine Amingruppe (B) aufweisen, zu verstehen sind,
   b. mindestens einer Verbindung I, bei der es sich um eine Carbonsäure ($A_v$) mit einer Funktionalität $v \geq 2$ oder ein Amin ($B_w$) mit einer Funktionalität $w \geq 2$ handelt,
   c. mindestens einer Verbindung II, bei der es sich um eine Carbonsäure ($A_v$) mit einer Funktionalität $v \geq 3$ oder ein Amin ($B_w$) mit einer Funktionalität $w \geq 3$ handelt, wobei es sich bei Verbindung II dann, wenn es sich bei Verbindung I um ein Amin handelt, um eine Carbonsäure handelt bzw. es sich bei Verbindung II dann, wenn es sich bei Verbindung I um eine Carbonsäure handelt, um ein Amin handelt, wobei die Mengen der von allen Carbonsäuren und Aminen abgeleiteten Einheiten in dem Polyamid die Formel 1

   $$P < 1/[(F_A-1).(F_B-1)] \quad (1)$$

   erfüllen, wobei:

   $$P = [\Sigma(n_i.f_i)]_X / [\Sigma(n_i.f_i)]_Y \quad (2)$$

   wobei $P \leq 1$ und entweder X = A und Y = B oder X = B und Y = A, und

   $$F = \Sigma(n_i.f_i^2)/\Sigma(n_i.f_i) \quad (3)$$

   für alle Carbonsäuren ($F_A$) bzw. Amine ($F_B$), wobei $f_i$ die Funktionalität einer Carbonsäure ($v_i$) oder eines Amins ($w_i$) ist, $n_i$ die Zahl der Mole einer Carbonsäure oder eines Amins ist und die Summierung für alle von Carbonsäuren und Aminen abgeleiteten Einheiten in dem Polyamid durchgeführt wird.

4. Mehrschichtiger thermogeformter Artikel nach einem der Ansprüche 1 bis 3, **dadurch gekennzeichnet, dass** das verzweigte Polyamid mindestens aus Einheiten aufgebaut ist, welche abgeleitet sind von:

   1. AB-Monomeren;
   2. mindestens einer Verbindung I, bei der es sich um eine Dicarbonsäure ($A_2$) handelt;
   3. mindestens einer Verbindung II, bei der es sich um ein Triamin ($B_3$) handelt; und
   4. gegebenenfalls einer Verbindung III, bei der es sich um eine Monocarbonsäure ($A_1$) handelt;
   **dadurch gekennzeichnet, dass** das Polyamid auch aus Einheiten aufgebaut ist, welche abgeleitet sind von
   5. mindestens einer Verbindung IV, bei der es sich um ein Diamin ($B_2$) handelt;

   und dass die relativen Mengen n der Komponenten die folgenden Beziehungen erfüllen:

   $$0 \leq \frac{n_{A1}}{n_{B3}} \leq 4$$

   $$1 \leq \frac{n_{A2}}{n_{B3}} \leq 4$$

$$200 \le \frac{n_{AB}}{n_{B3}} \le 2000$$

$$\frac{2}{5} \le \frac{n_{B2}}{n_{B3}}$$

$$0{,}996 \le \bar{f}_{nA} = \frac{n_{A1} + 2n_{A2} + n_{AB}}{n_{A1} + n_{A2} + n_{B2} + n_{B3} + n_{AB}} \le 1$$

$$0{,}98 \le \bar{f}_{nB} = \frac{2n_{B2} + 3n_{B3} + n_{AB}}{n_{A1} + n_{A2} + n_{B2} + n_{B3} + n_{AB}} \le 1{,}004$$

$$2n_{B2} + 3n_{B3} \le \frac{1}{400} n_{AB} + 3n_{A2}$$

5. Mehrschichtiger thermogeformter Artikel nach Anspruch 4, **dadurch gekennzeichnet, dass** es sich bei der Dicarbonsäure ($A_2$) um Adipinsäure handelt.

6. Mehrschichtiger thermogeformter Artikel nach Anspruch 4 oder 5, **dadurch gekennzeichnet, dass** es sich bei dem Triamin ($B_3$) um Bis(hexamethylen)triamin handelt.

7. Mehrschichtiger thermogeformter Artikel nach einem der Ansprüche 4-6, **dadurch gekennzeichnet, dass** es sich bei dem Diamin um 1,6-Hexamethylendiamin handelt.

8. Mehrschichtiger thermogeformter Artikel nach einem der Ansprüche 1-3, **dadurch gekennzeichnet, dass** das verzweigte Polyamid mindestens aus Einheiten aufgebaut ist, welche abgeleitet sind von:

   1. AB-Monomeren;
   2. mindestens einer Verbindung I, bei der es sich um eine Dicarbonsäure ($A_2$) handelt;
   3. mindestens einer Verbindung II, bei der es sich um ein Triamin ($B_3$) handelt; und
   4. mindestens einer Verbindung III, bei der es sich um eine Monocarbonsäure ($A_1$) handelt;

   **dadurch gekennzeichnet, dass** die relativen Mengen n der Komponenten die folgenden Beziehungen erfüllen:

$$\frac{3n_{B3}}{n_{A1} + 2n_{A2}} = \frac{60}{40} - \frac{40}{60}$$

$$\frac{2n_{A2}}{n_{A1}} = \frac{15}{85} - \frac{60}{40}$$

$$200 \le \frac{n_{AB}}{n_{B3}} \le 8000$$

9. Mehrschichtiger thermogeformter Artikel nach einem der Ansprüche 1-3, **dadurch gekennzeichnet, dass** das verzweigte Polyamid mindestens aus Einheiten aufgebaut ist, welche abgeleitet sind von:

   1. AB-Monomeren;
   2. mindestens einer Verbindung I, bei der es sich um ein Diamin ($B_2$) handelt;
   3. mindestens einer Verbindung II, bei der es sich um eine Tricarbonsäure ($A_3$) handelt; und
   4. mindestens einer Verbindung III, bei der es sich um ein Monoamin ($B_1$) handelt;

**dadurch gekennzeichnet, dass** die relativen Mengen n der Komponenten die folgenden Beziehungen erfüllen:

$$\frac{3n_{A3}}{n_{B1} + 2n_{B2}} = \frac{60}{40} - \frac{40}{60}$$

$$\frac{2n_{B2}}{n_{B1}} = \frac{15}{85} - \frac{60}{40}$$

$$200 \leq \frac{n_{AB}}{n_{A3}} \leq 8000$$

10. Mehrschichtiger thermogeformter Artikel nach einem der Ansprüche 1-9, **dadurch gekennzeichnet, dass** der mehrschichtige thermogeformte Artikel in der folgenden Reihenfolge eine Versiegelungsmittelschicht, eine Klebstoffschicht und eine Schicht aus verzweigtem Polyamid umfasst, wobei die Versiegelungsmittelschicht die Innenseite des thermogeformten Artikels bildet.

11. Mehrschichtiger thermogeformter Artikel nach einem der Ansprüche 1-10, **dadurch gekennzeichnet, dass** der mehrschichtige thermogeformte Artikel ferner eine Polymerschicht umfasst.

12. Mehrschichtiger thermogeformter Artikel nach Anspruch 11, **dadurch gekennzeichnet, dass** der mehrschichtige thermogeformte Artikel ferner eine Klebstoffschicht zwischen der Polymerschicht und der Polyamidschicht umfasst.

13. Mehrschichtiger thermogeformter Artikel nach einem der Ansprüche 1-12, **dadurch gekennzeichnet, dass** der mehrschichtige thermogeformte Artikel ferner eine Gasbarriereschicht umfasst.

14. Mehrschichtiger thermogeformter Artikel nach Anspruch 13, **dadurch gekennzeichnet, dass** die Gasbarriereschicht Ethylen-Vinylalkohol-Copolymer umfasst.

15. Verwendung eines mehrschichtigen thermogeformten Artikels nach einem der Ansprüche 1-14 zum Verpacken eines Lebensmittelprodukts.

16. Verfahren zur Herstellung eines mehrschichtigen thermogeformten Artikels nach einem der Ansprüche 1-15 durch Thermoformen einer Mehrschichtstruktur mit mindestens einer Versiegelungsmittelschicht, einer Klebstoffschicht und einer Polyamidschicht, **dadurch gekennzeichnet, dass** als Polyamid ein verzweigtes Polyamid verwendet wird.

17. Verfahren nach Anspruch 16, **dadurch gekennzeichnet, dass** es sich bei dem verzweigten Polyamid um das verzweigte Polyamid nach einem der Ansprüche 2-9 handelt.

## Revendications

1. Article thermoformé multicouche comprenant au moins une couche de produit de scellement, une couche adhésive et une couche de polyamide, **caractérisé en ce qu'**un polyamide ramifié est utilisé comme polyamide.

2. Article thermoformé multicouche selon la revendication 1, **caractérisé en ce que** le polyamide ramifié est un polyamide statistiquement ramifié intrinsèquement exempt de gel.

3. Article thermoformé multicouche selon la revendication 1 ou 2, **caractérisé en ce que** le polyamide ramifié est au moins composé de motifs issus de :

   a. monomères AB, qui sont entendus comme étant un monomère possédant à la fois un groupe acide carboxylique (A) et un groupe amine (B),
   b. au moins un composé I, lequel est un acide carboxylique ($A_v$) ayant une fonctionnalité $v \geq 2$ ou une amine ($B_w$) ayant une fonctionnalité $w \geq 2$,

c. au moins un composé II, lequel est un acide carboxylique ($A_v$) ayant une fonctionnalité v ≥ 3 ou une amine ($B_w$) ayant une fonctionnalité w ≥ 3, le composé II étant un acide carboxylique si le composé I est une amine ou le composé II étant une amine si le composé I est un acide carboxylique, les quantités de motifs issus de tous les acides carboxyliques et de toutes amines dans le polyamide satisfaisant à la formule 1

$$P < 1 / [(F_A - 1).(F_B - 1)] \qquad (1)$$

où :

$$P = [\Sigma(n_i.f_i)]_X / [\Sigma(n_i.f_i)]_Y \qquad (2)$$

où p ≤ 1 et soit X = A et Y = B, soit X = B et Y = A et

$$F = \Sigma (n_i.f_i^2) / \Sigma (n_i.f_i) \qquad (3)$$

pour, respectivement, tous les acides carboxyliques ($F_A$) et toutes les amines ($F_B$), $f_i$ étant la fonctionnalité d'un acide carboxylique ($v_i$) ou d'une amine ($w_i$), $n_i$ étant le nombre de moles d'un acide carboxylique ou d'une amine et la sommation étant effectuée pour tous les motifs issus d'acides carboxyliques et d'amines dans le polyamide.

4. Article thermoformé multicouche selon l'une quelconque des revendications 1-3, **caractérisé en ce que** le polyamide ramifié est constitué au moins de motifs issus de :

1. monomères AB ;
2. au moins un composé I, celui-ci étant un acide dicarboxylique ($A_2$) ;
3. au moins un composé II, celui-ci étant une triamine ($B_3$) ; et
4. facultativement un composé III, celui-ci étant un acide monocarboxylique ($A_1$),
**caractérisé en ce que** le polyamide est également constitué de motifs issus de
5. au moins un composé IV, celui-ci étant une diamine ($B_2$) ;

et **en ce que** les quantités relatives n desdits composants satisfont aux relations suivantes :

$$0 \le \frac{n_{A1}}{n_{B3}} \le 4$$

$$1 \le \frac{n_{A2}}{n_{B3}} \le 4$$

$$200 \le \frac{n_{AB}}{n_{B3}} \le 2000$$

$$\frac{2}{5} \le \frac{n_{B2}}{n_{B3}}$$

14

$$0,996 \le \bar{f}_{nA} = \frac{n_{A1} + 2n_{A2} + n_{AB}}{n_{A1} + n_{A2} + n_{B2} + n_{B3} + n_{AB}} \le 1$$

$$0,98 \le \bar{f}_{nB} = \frac{2n_{B2} + 3n_{B3} + n_{AB}}{n_{A1} + n_{A2} + n_{B2} + n_{B3} + n_{AB}} \le 1,004$$

$$2n_{B2} + 3n_{B3} \le \tfrac{1}{400} n_{AB} + 3n_{A2}$$

5. Article thermoformé multicouche selon la revendication 4, **caractérisé en ce que** l'acide dicarboxylique ($A_2$) est l'acide adipique.

6. Article thermoformé multicouche selon la revendication 4 ou 5, **caractérisé en ce que** la triamine ($B_3$) est la bis (hexaméthylène)triamine.

7. Article thermoformé multicouche selon l'une quelconque des revendications 4-6, **caractérisé en ce que** la diamine est la 1,6-hexaméthylènediamine.

8. Article thermoformé multicouche selon l'une quelconque des revendications 1-3, **caractérisé en ce que** le polyamide ramifié est constitué au moins de motifs issus de :

   1. monomères AB ;
   2. au moins un composé I, celui-ci étant un acide dicarboxylique ($A_2$) ;
   3. au moins un composé II, celui-ci étant une triamine ($B_3$) ; et
   4. au moins un composé III, celui-ci étant un acide monocarboxylique ($A_1$),

   **caractérisé en ce que** les quantités relatives n desdits composants satisfont aux relations suivantes :

$$\frac{3n_{B3}}{n_{A1} + 2n_{A2}} = \tfrac{60}{40} - \tfrac{40}{60}$$

$$\frac{2n_{A2}}{n_{A1}} = \tfrac{15}{85} - \tfrac{60}{40}$$

$$200 \le \frac{n_{AB}}{n_{B3}} \le 8000$$

9. Article thermoformé multicouche selon l'une quelconque des revendications 1-3, **caractérisé en ce que** le polyamide ramifié est constitué au moins de motifs issus de :

   1. monomères AB ;
   2. au moins un composé I, celui-ci étant une diamine ($B_2$) ;
   3. au moins un composé II, celui-ci étant un acide tricarboxylique ($A_3$) ; et
   4. au moins un composé III, celui-ci étant une monoamine ($B_1$),

   **caractérisé en ce que** les quantités relatives n desdits composants satisfont aux relations suivantes :

$$\frac{3n_{A3}}{n_{B1} + 2n_{B2}} = \frac{60}{40} - \frac{40}{60}$$

$$\frac{2n_{B2}}{n_{B1}} = \frac{15}{85} - \frac{60}{40}$$

$$200 \le \frac{n_{AB}}{n_{A3}} \le 8000$$

10. Article thermoformé multicouche selon l'une quelconque des revendications 1-9, **caractérisé en ce que** l'article thermoformé multicouche comprend, dans l'ordre suivant, une couche de produit de scellement, une couche adhésive et une couche de polyamide ramifié, la couche de produit de scellement formant l'intérieur de l'article thermoformé.

11. Article thermoformé multicouche selon l'une quelconque des revendications 1-10, **caractérisé en ce que** l'article thermoformé multicouche comprend en outre une couche de polymère.

12. Article thermoformé multicouche selon la revendication 11, **caractérisé en ce que** l'article thermoformé multicouche comprend en outre une couche adhésive entre la couche de polymère et la couche de polyamide.

13. Article thermoformé multicouche selon l'une quelconque des revendications 1-12, **caractérisé en ce que** l'article thermoformé multicouche comprend en outre une couche barrière aux gaz.

14. Article thermoformé multicouche selon la revendication 13, **caractérisé en ce que** la couche barrière aux gaz comprend un copolymère d'éthylène-alcool vinylique.

15. Utilisation d'un article thermoformé multicouche selon l'une quelconque des revendications 1-14 pour l'emballage d'un produit alimentaire.

16. Procédé pour la préparation d'un article thermoformé multicouche selon l'une quelconque des revendications 1-15 par thermoformage d'une structure multicouche comprenant au moins une couche de produit de scellement, une couche adhésive et une couche de polyamide, **caractérisé en ce qu'**un polyamide ramifié est utilisé comme polyamide.

17. Procédé selon la revendication 16, **caractérisé en ce que** le polyamide ramifié est le polyamide ramifié tel que défini dans l'une quelconque des revendications 2-9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 800915 A
- WO 03106171 A
- EP 345648 A
- WO 0035992 A